(19) Europäisches Patentamt
European Patent Office
Office européen des brevets

(11) Publication number: **0 006 684 A1**

(12) **EUROPEAN PATENT APPLICATION**

(21) Application number: **79300889.7**

(22) Date of filing: **21.05.79**

(51) Int. Cl.³: **C 08 L 23/02**, C 08 K 5/00

(30) Priority: **22.05.78 US 908320**

(43) Date of publication of application: **09.01.80 Bulletin 80/1**

(84) Designated Contracting States: **BE CH DE FR GB IT NL**

(71) Applicant: **The B.F. GOODRICH Company, Dept. 0015 WHB-6 500 South Main Street, Akron, Ohio 44318 (US)**

(72) Inventor: **Son, Pyong-Nae, 2106 Ayers Avenue, Akron Ohio 44313 (US)**

(74) Representative: **Gore, Peter Manson et al, W.P. THOMPSON & CO. Coopers Building Church Street, Liverpool L1 3AB (GB)**

# (54) Polymeric composition having enhanced resistance to photodegradation and method of enhancing the resistance of an ultra-violet light-sensitive polymer to photodegradation.

(57) This invention provides a composition comprising a polymer which is sensitive to photodegradation by ultraviolet light and, in an amount sufficient to substantially stabilize said polymer against such photodegradition, a mixture containing at least one substituted decahydroquinoline functional polymer of the formula

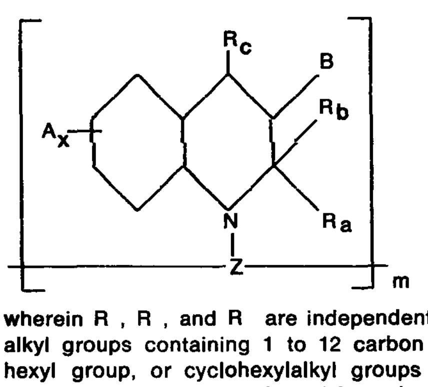

(I)

wherein R , R , and R are independently selected from alkyl groups containing 1 to 12 carbon atoms, a cyclohexyl group, or cyclohexylalkyl groups containing 7 to 14 carbon atoms; A is selected from the group consisting of alkyl groups containing 1 to 18 carbon atoms, alkoxy groups containing 1 to 12 carbon atoms in the group, ester groups containing a total of from 2 to 24 carbon atoms in the group, a cyclohexyl group, cyclohexylalkyl groups containing 7 to 14 carbon atoms in the group, hydroxy groups, amino groups and aminoalkyl groups and alkyl-substituted amino and aminoalkyl groups wherein the alkyl contains 1 to 12 carbon atoms; Z is a segment of the polymer backone derived from an olefinic monomer; x is 0, 1, 2 or 3; and B is hydrogen, an alkyl group containing 1 to 12 carbon atoms, a cyclohexyl group, or a cyclohexylalkyl group of 7 to 14 carbon atoms in the group; and m is at least 2 and at least one UV absorbing compound selected from the group consisting of benzotriazoles, benzoates and nickel phenolate complexes.

It also provides a method of enhancing the resistance of an ultra-violet light sensitive polymer to photodegradation which comprises incorporating therein a stabilizer of the general formula given above in an amount sufficient to substantially stabilise the polymer.

EP 0 006 684 A1

0006684
TITLE MODIFIED
see front page



DESCRIPTION

"POLYMERIC COMPOSITION HAVING ENHANCED RESISTANCE TO PHOTODEGRADATION"

The present invention concerns a polymeric composition having enhanced resistance to photodegradation.

Polymers have in the past and continue to provide an attractive substitute for other more traditional types of structural materials (e.g., wood and metals) because of relatively inexpensive materials and fabrication costs. As polymers continue to find new applications in, for example, the fabrication of automotive parts and building materials, they must also become more durable and capable of withstanding prolonged exposure to a variety of degradative forces. Degradation of polymers can be caused by exposure to light, heat and/or air. Such degradation is usually manifest by either a partial or total loss of structural integrity, changes in light transmission properties, changes in color, loss or reduction in flexibility and/or resiliency, or any combination of the above phenomenon. Those attempting to avoid polymer degradation have generally selected from among three possible approaches: (a) elimination or reduction of the degradative forces; (b) isolation of the sensitive polymer material from the degradative forces; or (c) modification of the polymer composition to enhance its resistance to degradative forces. The latter approach is generally preferable since it does not require engineering or structural change in the polymer product environment.

There are a variety of additives which have been disclosed as suitable for enhancing the resistance of polymers to one or more of the degradative forces discussed hereinabove. These additives (hereinafter referred to as "stabilizers") can be physically combined with or engrafted

upon the environmentally sensitive polymer, thereby prolonging its useful life in the hostile degradative environment. Stabilizers are available which can enhance the polymers resistance to more than one of the degradative forces and conversely, a stabilizer which is effective for prevention of, for example, oxidative degradation may have little if any effect upon the polymers resistance to other degradative agents. Thus, it is not uncommon for polymers to contain a variety of stabilizer materials, each being present for the prevention of the particular degradative reaction.

One of the more difficult to control of the degradative forces is irradiation of the polymer by ultraviolet light. The impact of such irradiation will of course vary depending upon the intensity and duration of exposure and thus may manifest itself only after a prolonged interval. The irradiation of polymers with ultraviolet light can often times cause cross-linking of these materials thereby reducing their resiliency and/or impact resistance. Changes in color and opacity are also often affected by prolonged exposure of the polymer to ultraviolet light. While many materials are known, and commercially available, as stabilizers against ultraviolet light degradation, the degree of protection afforded by such agents is often concentration dependent. The following list of references are illustrative of the types of ultraviolet absorbers commonly used in conjunction with polymeric materials sensitive to photodegradation: U.S. Patent Nos. 3,362,929; 3.362,930; 3,829,292; 3,901,849; 3,910,918; 3,939,164; UK Patent 999,806; and an article appearing in J. Am. Chem. Soc., Vol. 60: 1458 et seq.(1938). In addition, commonly assigned U.S. patent applications Serial No. 697,345 and 697,387 (both filed on June 18, 1976) disclose compounds which are highly effective as ultraviolet light stabilizers for polymeric materials. The compounds disclosed in the above-referenced pending patent applications are substituted decahydroquinolines. Such compounds are highly effective in enhancing the resistance of polyolefins to photodegradation by ultraviolet light.

As will be readily appreciated, the addition of substantial amounts (in excess of 10 weight percent) of stabilizer materials to a polymer can often modify its intrinsic physical, chemical and/or electrical properties or the intrinsic properties of articles prepared therefrom. Thus, there is a continuing need for highly efficient ultraviolet light stabilizer compounds and compositions which are protective of polymers at low concentrations e.g. 10 weight per cent or less.

According to the present invention a composition is provided comprising a polymer which is sensitive to ultraviolet light and, in an amount sufficient to enhance the resistance of the polymer to photodegradation, a mixture containing at least one substituted decahydroquinoline functional polymer of the formula

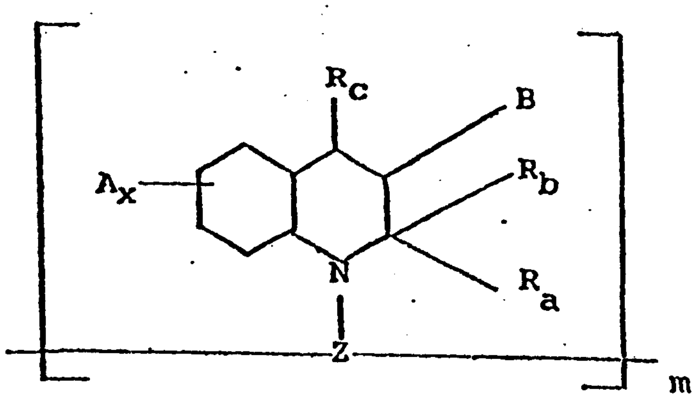

(I)

wherein $R_a$, $R_b$, and $R_c$ are independently selected from alkyl groups containing 1 to 12 carbon atoms, a cyclohexyl group, or cyclohexylalkyl groups containing 7 to 14 carbon atoms; A is selected from the group consisting of alkyl groups containing 1 to 18 carbon atoms, alkoxy groups containing 1 to 12 carbon atoms in the group, ester groups containing a total of from 2 to 24 carbon atoms in the group, a cyclohexyl group, cyclohexylalkyl groups containing 7 to 14 carbon atoms in the group, hydroxy groups, amino groups and aminoalkyl

groups and alkyl-substituted amino and aminoalkyl groups wherein the alkyl contains 1 to 12 carbon atoms; Z is a segment of the polymer backbone derived from an olefinic monomer; x is 0, 1, 2 or 3; and B is hydrogen, an alkyl group containing 1 to 12 carbon atoms, a cyclohexyl group, or a cyclohexylalkyl group of 7 to 14 carbon atoms in the group; and m is at least 2, and at least one UV absorbing compound selected from the group consisting of benzotriazoles, benzoates and nickel phenolate complexes. The polymer of the stabilizer mixture can be present in the composition as a physically distinct entity or chemically bonded to the ultraviolet light sensitive polymer. In one of the preferred embodiments of this invention, the polymer of the stabilizer mixture is chemically engrafted upon the ultraviolet light sensitive polymer. In another of the preferred embodiments of this invention, the polymer of the stabilizer mixture is present in the composiition as a copolymer; that is prepared by copolymerization with an ultraviolet light sensitive monomer or with monomers which are relatively insensitive to photodegradation by ultraviolet light (e.g. 4-vinylpyridine or N-vinylcarbazole).

By means of the present invention it is possible to remedy the deficiencies referred to above as well as related deficiencies in the prior art and to provide a composition having enhanced resistance to photodegradation from ultraviolet light while containing only a few concentrations of stabilizer thus prolonging the useful life of the composition in a degradative environment.

The compositions of this invention can be readily prepared for example by simply mixing a polymer which is sensitive to ultraviolet light degradation and the stabilizer mixture under conditions designed for uniform distribution of the mixture throughout the polymer. Ordinarily, the concentration of stabilizer mixture in the polymer will range from about 0.05 parts by weight stabilizer mixture per one hundred parts by weight ultraviolet light sensitive polymer to about 5 parts by weight stabilizer mixture per one hundred parts by weight ultraviolet light sensitive polymer. The preferred content of stabilizer mixture in the polymer compositions of this invention is typically in the range of from about 0.1 parts by weight stabilizer mixture per one hundred parts ultraviolet light sensitive polymer to about 1 part by weight stabilizer mixture per one hundred parts by weight ultraviolet light sensitive polymer.

Virtually all polymeric materials are sensitive, at least to some degree, to photodegradation by ultraviolet light. The term "photodegradation" is used throughout this disclosure in reference to ultraviolet light sensitive polymers to describe any photo-induced changes in the physical, chemical, and/or electrical properties caused by such irradiation. Such degradative changes may, for example, involve cross-linking of the polymer, dehydrohalogenation, reduction in chain length, or photo-oxidation. Polymers which are especially sensitive to ultraviolet light degradation are materials which contain unsaturation along their respective backbone, vinyl halide polymers, polyolefins, polyacetaldehydes, polyurethanes, ABS resins, polystyrene, polyacrylonitrile, polycarbonates, polyacrylates, poly α-substituted acrylates, varnish, phenol-formaldehyde resins, polyepoxides, polyesters, and their respective blends and copolymers. The preferred ultraviolet light sensitive polymers of the composition of this invention are poly-α-monoolefins.

Examples of α-monoolefin monomers used in the preparation of the latter polymers are ethylene, propylene, isobutylene, 1-butene, 1-pentene, 1-hexene and 4-methyl-1-pentene. The stabilizer mixture disclosed herein is especially suitable for use in the retardation of photodegradation of polypropylene.

The polymers of the formula I given above can be prepared for example by a variety of methods disclosed in the open literature. One especially satisfactory technique for the preparation of the corresponding monomer comprises a multi-step process involving: first the condensation reaction of an aromatic amine, for example aniline, or a ring substituted aniline with a ketone, or mixture of ketones, to prepare the dihydroquinoline. This intermediate is then hydrogenated in the presence of a metal catalyst to yield the decahydroquinoline. Literature preparations for the above compound are also disclosed in U.S. Patent Nos. 3,829,292 and 3,910,918; and in J.Am.Chem.Soc., Vol. 60 (1938) at pages 1458 et seq. Dihydroquinoline dimers can also be prepared according to the same general reaction scheme. A process for hydrogenation of the dihydroquinoline to yield the decahydroquinoline is disclosed in U.S. Patent Nos. 2,831,861 and 2,998,468. The decahydroquinoline compounds thus prepared can thereafter be reacted at the N-position with a variety of monomers, or groups which are capable of forming monomers or groups which are reactive toward chain propagating agents. Polymers corresponding to formula I are the subject of a copending commonly assigned U.S. patent application Serial No. 850,994 filed November 14, 1977 in the names of Robert Wesley Layer and Pyong-Nae Son. This copending application (now U.S. Patent No. , , ) is hereby incorporated by reference in its entirety.

UV absorbing benzotriazoles which are suitable for use in the stabilizer mixtures of this invention can be represented by the following structural formula:

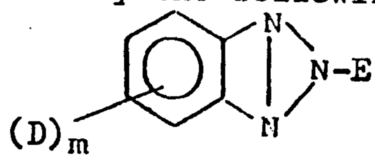

wherein D is halogen, and E is phenyl hydroxyphenyl, lower alkyl substituted phenyl or lower alkyl hydroxy substituted phenyl, said lower alkyl having 1 to 4, usually 1 to 3, carbon atoms.

Compounds falling within the scope of above formula are commercially available (e.g., Tinuvin 327 [2-(3',5'-di-t-butyl-2'-hydroxyphenyl)-5-chlorobenzotriazole] and Tinuvin 328-[2-(3',5'-di-t-amyl-2'-hydroxyphenyl)-5-benzotriazole] available from Ciba Geigy), or can be prepared by techniques described in the open literature. One such representative preparation is disclosed in U.S. Patents 3,004,896 and 3,018,269 which are hereby incorporated by reference in their entirety.

UV absorbing benzoates which are suitable for use in the stabilizer mixtures of this invention can be represented by the following structural formula

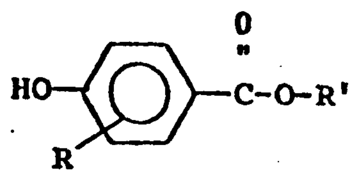

wherein R is lower alkyl of 1-4 carbon atoms, and R' is aryl or alkaryl.

Compounds falling within the scope of the above

formula are commercially available (e.g., Ferro AM 340-[2',4'-di-t-butylphenyl 3,5-di-t-butyl-4-hydroxybenzoate] available from Ferro Corporation), or can be prepared by techniques described in the open literature. One such representative preparation is disclosed in U.S. Patent 3,146,217, which is hereby incorporated by reference in its entirety.

UV absorbing nickel-phenolate complexes which are suitable for use in the stabilizer mixture of this invention can be represented by the following structural formula

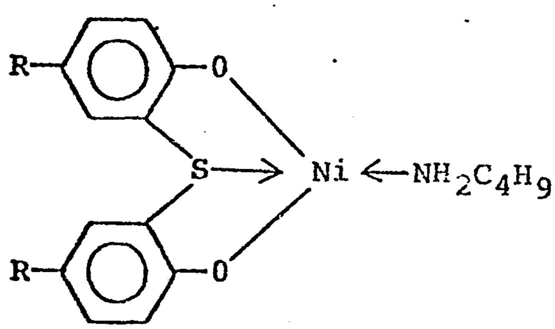

wherein R is lower alkyl of 1-4 carbon atoms.

Compounds falling within the scope of the above formula are commercially available (e.g., Cyasorb UV-1084-[(2,2'-thio-bis-4-t-octyl phenolate])-n-butylamine nickel - available from American Cyanamide Company) or can be prepared by techniques described in the open literature. One such representative preparation is disclosed in U.S. Patent 3,975,358, which is hereby incorporated by reference in its entirety.

The compositions of this invention can contain, in addition to the materials described hereinabove, a variety of optional ingredients. Such ingredients are, for example metal oxides, e.g. zinc, calcium or magnesium oxide, fatty acids e.g. stearic, lauric acid or a metal salt thereof; fillers e.g. calcium or magnesium carbonate, calcium or barium sulfonate, aluminium silicate or asbestos;

plasticizers and extenders, for example a dialkyl or diaryl organic acid, e.g. diisobutyl, diisooctyl, diisodecyl or dibenzyl oleate, stearate, sebacate, azelate or phthalate; ASTM Type 2 petroleum oils, paraffinic oils, castor oil, tall oil or glycerine; antioxidants, e.g. 2,5-di-t-butyl paracresol, 2,2'-methylene-bis-(4-ethyl-6-t-butyl phenol), 2,2'-thio-bis-(4-methyl-6-t-butyl phenol), 2,2'-methylene-bis-6-t-butyl-4-ethyl phenol, 4,4'-butylidene-bis-6-t-butyl-m-cresol, 2-(4-hydroxy-3,5-di-t-butylanilino-4,6-bis(octyl-thio)1,3,5-triazine, hexahydro-1,3,5-tris-β-(3,5-di-t-butyl-4-hydroxyphenyl)-propionyl-s-triazine, tris-(3,5-t-butyl-4-hydroxybenzyl)-isocyanurate, tetrakismethylene-3(3',5'-di-t-butyl-4'-hydroxyphenyl)propionate methane, distearylthiodipropionate, dilaurylthiodipropionate, tri (nonylphenyl) phosphite or tinthioglycolate; and other ingredients for example pigments, tackifiers, flame retardants or fungicides.

Optional compounding ingredients which are especially preferred for use in combination with above stabilizer mixtures are the antioxidants. The inclusion within the polymer composition of an antioxidant, in addition to the UV stabilizer mixture, confers upon the polymer composition stability against two of the more environmentally hostile degradative forces. The antioxidant can be present within the polymer composition within the range of from about 0.1 to about 10 parts by weight per 100 parts by weight polymer, and preferably from about 0.2 to about 5 parts by weight per 100 parts by weight of polymer. Generally, the phenolic antioxidants are preferred for use in conjunction with the UV stabilizer mixtures of this invention.

The combination of the UV stabilizer mixture and a phenolic antioxidant is especially suitable for stabilization of polyolefin polymers; especially stabilization against degradation by heat, oxygen and ultraviolet light.

Ordinarily, the ultraviolet light sensitive polymer is compounded with the various types of stabilizer materials in accord with standard mixing techniques and equipment; for example in a Banbury mixer, a Henschel mixer, a rubber mill, an extruder mixer or equivalent device. The various components of the composition may be physically intimately blended either in the absence of or in the presence of a common solvent; or in a solvent which is capable of dissolving the polymer component of the composition yet substantially incapable of dissolving the stabilizer ingredients. Typical of such solvent/dispersing agents are hexane and benzene. Subsequent to intimately dispersing the various components of the composition within one another, the dispersing agent (if any) can be removed by selective evaporation and the resultant resin recovered. The resin may thereafter be formed into usable products by a variety of standard techniques.

The ultraviolet light stability of the compositions of this invention is evaluated by exposing a sample of the composition to an Xenon or carbon arc light in a Weather-Ometer (available from Atlas Electric Devices Co., Chicago, Illinois) operating at temperatures of about 60°C. Degradation of the sample is monitored periodically by measuring the carbonyl adsorption band at 1720 $cm^{-1}$ using an IR spectrophotometer. The relatively rapid formation of carbonyl sites indicates photodegradation of the sample. This test procedure is an accepted method for evaluation of the efficacy of such UV stabilizers and is fully described in the literature, see "Photodegradation, Photooxidation and Photostabilization of Polymers" by Ranby and Raybeck, John Wiley and Sons, New York City (1975) at page 125 et seq., and is also disclosed in U.S. Patent No. 3,909,493. Photodegradation of the sample can also be manifest by visual cracking of the sample when

heated to about 180° C. Oxidative degradation and thermal stability of the sample can also be verified by monitoring the time required to effect discoloration and/or embrittlement of the sample in an ageing oven maintained at 140° C.

## EVALUATION PROCEDURE

A series of films were prepared (20 mils thick) from polypropylene (Profax 6501, available from Hercules Inc., Wilmington, Delaware) and (1) Tinuvin 328 (2-(3',5'-di-t-amyl-2'-hydroxyphenyl)benzotriazole), a known UV stabilizer available from Ciba-Geigy; (2) a substituted decahydroquinoline polymer; (3) a mixture of Tinuvin 328 and substituted decahydroquinoline polymer; and (4) devoid of any stabilizing agent. The above films were prepared by dry blending the polypropylene and stabilizer in the appropriate relative proportions followed by melt blend of the resultant sample in a Brabender extruder operated at 450°F (232°C) and 75 RPM.

Films were prepared from the extruded material by placing a measured amount of the composition between parallel aluminum plates which were maintained at 420°F (232°C). The plates were then brought together thereby compressing the sample. The duration of the molding cycle is approximately three minutes and the pressure applied during the cycle is 20,000 psig. Heating is continued for only 1/3 of the compression cycle. A four minute cooldown period is allowed prior to separation of the aluminium plates. The molded sheet thus obtained is in the range of 10 to 20 mils thick. This sheet is stripped from the aluminum plates and cut into strips approximately 1" x 2" and mounted for subsequent testing in an Atlas Model 60-W Weather-Ometer. The Weather-Ometer is operated at 140-150°F (60°C to 66°C). The sample, upon being placed within this device, was subjected to an Xenon light source and the ultraviolet light degradation thereof

plotted by monitoring the infrared absorption band of the sample at 1720 $cm^{-1}$ (this band corresponding to carbonyl group formation). A Perkin-Elmer Model 467 IR spectrophotometer was used to monitor carbonyl group formation. In addition to the listed materials of the composition specified hereinabove, all but one of the samples contained an antioxidant, Irganox 1010 [(tetrakis-[methylene(3,5-di-t-butyl-4-hydroxyhydrocinnamate)]methane, available from Ciba Geigy]; or GOODRITE® 3125 (a triester of a substituted cinnamic acid and 1,3,4-tris[2-hydroxyethyl]-s-triazine-2,4,6-trione, available from BFGoodrich).

EXAMPLES

The Examples and samples which follow further define, describe and illustrate the preparation of compounds for use in the invention and evaluation of the compositions of this invention. Apparatus and procedures used in the preparation and evaluation of such Examples and samples are standard or as hereinbefore described. Parts and percentages appearing in such Examples are by weight unless otherwise stipulated.

EXAMPLE I

Preparation of N-(2-acryloxyethyl)-2,2,4-trimethyldecahydroquinoline.

Following the method described in U.S. Patent 3,872,161, the title compound was prepared by reacting 1 mole of 1-(2-hydroxyethyl)-2,2,4-triethyldecahydroquinoline (hereinafter referred to as HETDQ) with 3 moles of methylacrylate in the presence of 0.8 gram of phenothiazine and 13 grams of zinc carbonate. The above mixture was heated to 87°C. in a 1 liter 3-necked flask equipped with a fractionating column. The pot temperature was gradually increased to a maximum of 164°C. while methanol and other lower boiling

point liquid fractions were collected. The reaction took four days.

The resulting reaction mixture was diluted with ethanol and filtered. Solvents were removed from the above filtrate and fractionated under vacuum. The fraction which boiled at 105 to 109°C. (0.25 mmHg) was the desired product. It is a clear liquid and weighed 53.2 gms.

Calculated for $C_{17}H_{29}NO_2$:
C, 73.07; H, 10.46; N, 5.01.
Found: C, 73.61; H, 11.24: N, 5.18.

EXAMPLE II

Preparation of N-(2-hydroxy-3-methacryloxyethyl)-2,2,4-trimethyldecahydroquinoline.

In a 500 ml 3-neck flask were placed 0.62 mole of 2,2,4-trimethyldecahydroquinoline (hereinafter referred to as TDQ), 0.62 mole of glycidyl methacrylate, 0.5 gram of p-toluene sulfonic acid, 0.5 gram of p-hydroquinone, and 0.5 mls of ethanol. The above mixture was heated and allowed to react overnight. The maximum pot temperature was approximately 188°C.

The following day, the reaction mixture was filtered with methanol. The filtrate was concentrated on an evaporator, and the residue fractionated to give 54.9 grams of a pale yellow syrup, b.p. 149-153°C. (0.25 mmHg).

Calculated for $C_{19}H_{33}NO_3$:
C, 70.55; H, 10.28; N, 4.33.
Found: C, 70.29; H, 10.66; N, 4.33.

EXAMPLE III

Preparation of N-(2-methacryloxyethyl)-2,2,4-trimethyldecahydroquinoline.

Following the method described in U.S. Patent 3,172,856, 0.61 moles of HETDQ were reacted with 0.61 moles of methacrylic acid in the presence of 0.3 grams of hydroquinone and 0.4 grams of sodium acid sulphate. Xylene (400 mls) was used as a solvent. The above mixture was stirred for an hour, then heated to reflux overnight. A total of 10.3 mls of water was collected. Xylene was removed from the reaction mixture and the desired product isolated by fractionating at reduced pressures. The fraction which boiled at 144-146°C. (0.7 mmHg) gave a satisfactory elemental analysis. A total of 134.3 grams (75% of theoretical yield) was produced and isolated.

Calculated for $C_{18}H_{31}NO_2$:
C, 73.67; H, 10.65; N, 4.77.
Found: C, 73.63; H, 10.86; N, 4.66

EXAMPLE IV

Preparation of a copolymer from N-(2-acryloxyethyl)2,2,4-trimethyldecahydroquinoline and 2-hydroxyl-4-(2-hydroxy-3-methacryloxy)propoxybenzophenone.

In a 500 ml 3-necked flask were placed 0.05 mole of N-(2-acryloxyethyl)-2,2,4-trimethyldecahydroquinoline (prepared in the manner described in Example I), 0.5 mole of 2-hydroxy-4-(2-hydroxy-3-methacryloxy)propoxybenzophenone, 0.4 gram of asobisisobutyronitrile (hereinafter referred to as AIBN), and 250 mls of tetrahydrofuran. The above mixture was stirred under a nitrogen atomosphere, gradually heated to reflux and allowed to react for 3 days with mild agitation. The solvent was subsequently removed from the reaction mixture by evaporation. The residue remaining in the flask was taken up with methanol and the desired product isolated by centrifugation. A total of 9.2 grams pale yellow solids were obtained. The pale yellow solid was subjected to NMR spectro-analysis. The results of such evaluation indicate that the product contained 42.2 mole percent of 2,2,4-trimethyldecahydroquinoline groups, and 57.8 mole percent benzophenone functional groups. Elemental analysis showed 67.28% carbon, 7.42% hydrogen and 1.50% nitrogen.

EXAMPLE V

Preparation of copolymers from acrylonitrile and N-(2-methylacryloxyethyl)-2,2,4-trimethyldecahydroquinoline.

Following essentially the same procedure as described in Example IV, 0.1 mole of N-(2-methacryloxyethyl)-2,2,4-trimethyldecahydroquinoline was reacted with 0.1 mole of acrylonitrile in the presence of 0.4 gram of AIBN and 120 mls of 2-propanol.

The 2-propanol used as the polymerization medium is degassed with nitrogen prior to initiation of the polymerization.

The reaction mixture was stirred and heated gradually to reflux and the reaction allowed to continue overnight. Two separate layers were formed within the reaction vessel. The upper layer was removed by decantation and then ethanol was added to the lower layer, thereby

forming a precipitate. The precipitated material was washed twice with alcohol and dried in a vacuum oven. The dried solid was ground and sieved through 60 mesh screening. The off-white powder thus recovered, (approximately 17.3 grams) had a melting point in the range of 104 - 114°C. and was insoluble in dimethylsulfoxide (DMSO).

EXAMPLE VI

Preparation of copolymer from N-(2-methacryloxyethyl)-2,2,4-trimethyldecahydroquinoline and 2-hydroxy-4-(2-hydroxy-3-methacryloxy)propoxybenzophenone.

Following essentially the same procedures described in Example IV, about 0.1 mole of N-(2-methacryloxyethyl)-2,2,4-trimethyl decahydroquinoline was reacted with 0.1 mole of 2-hydroxy-4-(2-hydroxy-3-methacryloxy) propoxy benzophenone in the presence of 0.4 gram of AIBN in 100 milliliters of dried benzene.

The reaction mixture was gradually heated to reflux and allowed to react overnight. The resulting mixture was titrated with hexane thereby forming a solid material. The solids thus formed are ground in a mortar and pestle and thereafter separated from hexane by filtration. The recovered solids are dried in a vacuum oven, ground and sieved through a number 60 mesh screen. The solids thus recovered weighed approximately 22.6 grams and had a softening point of about 114°C. Elemental analysis of the polymeric sample revealed 70.4% C and 8.18% H, and 2.23% N. Further extraction of the reaction medium with acetone followed by hexane yielded additional copolymer. Infrared spectral analysis confirmed the subsequently recovered materials to be identical to that originally obtained.

Table which follows provides comparative data for a series of polypropylene film, all but one of which contain one or more stabilizer materials.

**TABLE I**

| Sample No. | Additive | Conc (phr) | Failure Time (in hours) 0.5 Carbonyl Absorbance |
|---|---|---|---|
| 1 | None | | 150 |
| 2 | Irganox 1010 | 0.20 | 400 |
| 3 | Goodrite 3125 | 0.20 | 250 |
| 4 | Goodrite 3125<br>Ferro AM 340 | 0.20<br>0.20 | 1600 |
| 5 | Goodrite 3125<br>1-(2-hydroxyethyl)-2,4-diethyl-2-methyldecahydroquinoline | <br>0.20 | 550 |
| 6 | Goodrite 3125<br>1-(2-hydroxyethyl)-2,4-diethyl-2-methyldecahydroquinoline<br>Ferro AM 340 | 0.20<br>0.10<br>0.10 | 1300 |
| 7 | Irganox 1010<br>Tinuvin 328 | 0.20<br>0.20 | 750 |
| 8 | Irganox 1010<br>1-(2-hydroxyethyl)-2,4-diethyl-2-methyldecahydroquinoline | 0.20<br>0.20 | 1000 |
| 9 | Irganox 1010<br>1-(2-hydroxyethyl)-2,2,4,8-tetramethyldecahydroquinoline<br>Tinuvin 328 | 0.20<br>0.10<br>0.10 | 1100 |
| 10 | Goodrite 3125<br>Cyasorb 1084 | 0.20<br>0.20 | 1050 |
| 11 | Goodrite 3125<br>1-(2-hydroxyethyl)-2,2,4,6-tetramethyldecahydroquinoline | 0.20<br>0.20 | 650 |

TABLE I (cont'd)

| Sample No. | Additive | Conc (phr) | Failure Time (in hours) 0.5 Carbonyl Absorbance |
|---|---|---|---|
| 12 | Goodrite 3125 | 0.20 | |
| | 1-(2-hydroxyethyl)-2,2,4,6-tetramethyldecahydroquinoline | 0.10 | |
| | Cyasorb 1084 | 0.10 | 850 |
| 13 | Irganox 1010 | 0.20 | |
| | A copolymer of acrylonitrile and N-(2-methacryloxyethyl)-2,2,4-trimethyldecahydroquinoline | 0.20 | 500 |
| 14 | Irganox 1010 | 0.20 | |
| | A copolymer of acrylonitrile and N-(2-methacryloxyethyl)-2,2,4-trimethyldecahydroquinoline | 0.10 | 900 |
| | Tinuvin 328 | 0.10 | |
| 15 | Goodrite 3125 | 0.20 | |
| | 1-(2-hydroxyethyl)-2,2,4-trimethyldecahydroquinoline | 0.20 | 800 |
| 16 | Goodrite 3125 | 0.20 | |
| | 1-(2-hydroxyethyl)-2,2,4-trimethyldecahydroquinoline | 0.10 | |
| | Ferro AM 340 | 0.10 | 1700 |

Results comparable to Sample 5 are obtained with the polymers of Preparations IV and VI when employed in conjunction with one or more UV stabilizer compounds in the foregoing fashion.

0006684

CLAIMS.

1. A composition comprising a polymer which is sensitive to photodegradation by ultraviolet light and, in an amount sufficient to substantially stabilize said polymer against such photodegradation, a mixture containing at least one substituted decahydroquinoline functional polymer of the formula

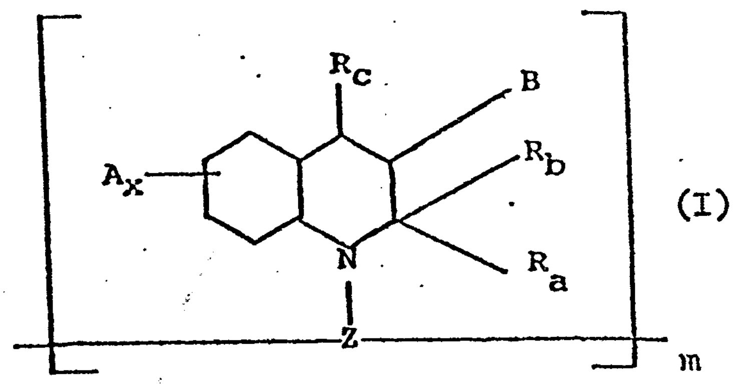

(I)

wherein $R_a$, $R_b$, and $R_c$ are independently selected from alkyl groups containing 1 to 12 carbon atoms, a cyclohexyl group, or cyclohexylalkyl groups containing 7 to 14 carbon atoms; A is selected from the group consisting of alkyl groups containing 1 to 18 carbon atoms, alkoxy groups containing 1 to 12 carbon atoms in the group, ester groups containing a total of from 2 to 24 carbon atoms in the group, a cyclohexyl group, cyclohexylalkyl groups containing 7 to 14 carbon atoms in the group, hydroxy groups, amino groups and aminoalkyl groups and alkyl-substituted amino and aminoalkyl groups wherein the alkyl contains 1 to 12 carbon atoms; Z is a segment of the polymer backbone derived from an olefinic monomer; x is 0, 1, 2 or 3; and B is hydrogen, an alkyl group containing 1 to 12 carbon atoms, a cyclohexyl group, or a cyclohexylalkyl group of 7 to 14 carbon atoms in the group; and m is at least 2 and at least one

UV absorbing compound selected from the group consisting of benzotriazoles, benzoates and nickel phenolate complexes.

2. A composition as claimed in claim 1 in which the concentration of stabilizer mixture is from about 0.5 to about 5 parts by weight per 100 parts by weight of ultraviolet light sensitive polymer.

3. A composition as claimed in claim 2 in which the concentration is from about 0.1 to about 1 part by weight per 100 parts by weight of ultraviolet light sensitive polymer.

4. A composition as claimed in claim 1 in which the polymer of the stabilizer mixture is chemically engrafted on the ultraviolet light sensitive polymer.

5. A composition as claimed in claim 1 in which the polymer of the stabilizer mixture is present as a copolymer.

6. A composition as claimed in claim 5 in which the copolymer is a copolymer with an ultraviolet light sensitive monomer.

7. A composition as claimed in claim 6 in which the substituted decahydroquinoline functional polymer is a copolymer of acrylonitrile and N-(2-methacryloxyethyl)-2,2,4-trimethyldecahydroquinoline.

8. A composition as claimed in any of claims 1 to 7 in which the ultraviolet light sensitive polymer is a poly-α-monoolefine.

9. A composition as claimed in claim 8 in which the polymer is polypropylene.

10. A composition as claimed in any of the preceding claims in which an anti-oxidant is also present.

11. A composition as claimed in claim 10 in which the anti-oxidant is a phenolic anti-oxidant.

12. A composition as claimed in claim 10 or 11 in which the antioxidant is present within the range from about 0.1 to about 10 parts by weight per 100 parts by weight of polymer.

13. A composition as claimed in claim 12 in which the antioxidant is present within the range from about 0.2 to about 5 parts by weight per 100 parts by weight of polymer.

14. Method of enhancing the resistance of an ultra-violet light sensitive polymer to photodegradation which comprises incorporating therein a stabilizer of the general formula given in claim 1 in an amount sufficient to substantially stabilize the polymer.

0006684

Application number

European Patent Office

# EUROPEAN SEARCH REPORT

EP 79 30 0889

| Category | Citation of document with indication, where appropriate, of relevant passages | Relevant to claim |
| --- | --- | --- |
| | FR - A - 2 339 236 (BASF)<br>* claim *<br>--- | 1,2,3,8 |
| D | US - A - 4 073 770 (PYONG-NAE SON et al.)<br>* claim 1; column 2, lines 37-68 *<br>--- | 1,2,3,8,9,10,11 |
| A | US - A - 4 049 751 (FRANK SCARDIGLIA) | 1 |
| A | CHEMICAL ABSTRACTS, Vol. 83, no. 26, published on December 29, 1975<br>ref.: 207090p, page 41, column 2<br>COLUMBUS (OHIO) USA<br>& JP - A - 75 94 048 (DAINICHI-NIPPON CABLES)<br>published on July 26, 1975<br>* entire abstract *<br>--- | |
| A | FR - A - 2 378 818 (SIEMENS)<br>* claim 1 *<br>--------- | 1 |

CLASSIFICATION OF THE APPLICATION (Int. Cl.²)

C 08 L 23/02
C 08 K 5/00

TECHNICAL FIELDS SEARCHED (Int.Cl.²)

C 08 L 23/00
/02
/04
/06
/10
/12
C 08 K 5/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

✓ The present search report has been drawn up for all claims

| Place of search | Date of completion of the search | Examiner |
| --- | --- | --- |
| The Hague | 28-08-1979 | GOOVAERTS |

EPO Form 1503.1 06.78